# EUROPÄISCHE PATENTSCHRIFT

(11) **EP 0 417 549 B1**
(45) Veröffentlichungstag und Bekanntmachung des Hinweises auf die Patenterteilung: **21.04.1993**
(21) Anmeldenummer: 90116593.6
(22) Anmeldetag: 30.08.1990
(51) Int. Cl.: B23Q 1/08, B23Q 11/00

(54) **Werkzeugmaschine**
Machine tool
Machine-outil

(30) Priorität: 09.09.1989 DE 3930070
(43) Veröffentlichungstag der Anmeldung: 20.03.1991
(73) Patentinhaber: Chiron-Werke GmbH & Co. KG, 78532 Tuttlingen (DE)
(72) Erfinder: Rütschle, Eugen, Dipl.-Ing., D-7202 Mühlheim (DE)
(74) Vertreter: Witte, Alexander, Dr.-Ing.

(56) Entgegenhaltungen:
- DE-A- 2 200 961
- DE-A- 2 632 228
- DE-A- 3 320 873

## Beschreibung

Die Erfindung betrifft eine Werkzeugmaschine mit einem Spindelstock, in dem eine um eine Spindelachse drehbare Spindel gelagert ist, die eine Aufnahme für Kegel von Werkzeughaltern aufweist, mit einer in einem raumfesten Lagerring des Spindelstocks angeordneten ersten Ringnut, an die ein erstes Ende mindestens eines Kanals der drehbaren Spindel anschließt, der am zweiten Ende mit einer Ausblasöffnung in die Aufnahme mündet, wobei die erste Ringnut an eine Druckluftquelle anschließbar ist und wobei ferner bei stillstehender Spindel eine elastische Ringdichtung axial beidseits der ersten Ringnut mittels Luftdruck abdichtend zwischen dem raumfesten Lagerring und der Spindel anlegbar ist.

Eine Werkzeugmaschine der vorstehend genannten Art ist aus der DE-OS 33 20 873 bekannt.

Bei Werkzeugmaschinen der hier interessierenden Art, nämlich sog. Bearbeitungszentren, werden in die Aufnahme der Spindel nacheinander Werkzeughalter mit verschiedenen Werkzeugen eingewechselt. Dies geschieht mit Hilfe von Werkzeugwechslern, die einen Werkzeughalter aus einem Werkzeugmagazin entnehmen und in die Aufnahme der Spindel einsetzen bzw. umgekehrt.

Während des Werkzeugwechsels ist die innenkegelförmige Aufnahme des Spindelstocks frei, weil der Werkzeughalter mit seinem Kegel aus der Aufnahme heraus und von dieser weg zum Werkzeugmagazin hin verschwenkt wurde. In dieser Phase kann es geschehen, daß von herumspritzender Bohrflüssigkeit mitgenommene Metallspäne in die Aufnahme der Spindel gelangen. Wird nun der nächste Werkzeugwechsler mit seinem Kegel in die Aufnahme eingeführt, so wird der metallische Span zwischen den Kegelflächen von Werkzeughalter und Aufnahme eingequetscht und beide kegeligen Flächen können beschädigt werden. Dies gilt besonders deswegen, weil die Werkzeughalter mit verhältnismäßig großen axialen Spannkräften in die Aufnahme der Spindel eingezogen werden, weil der Reibschluß zwischen dem Kegel und der innenkegelförmigen Gegenfläche der Aufnahme der Spindel zur Drehmomentenübertragung mit ausgenutzt wird.

Es ist daher bekannt, die Aufnahmen von Spindeln während des Werkzeugwechsels auszublasen. Während dies früher von Hand dadurch geschah, daß der Benutzer der Werkzeugmaschine die Spindelaufnahme bei entnommenem Werkzeugkegel mit einer Preßluftpistole ausblies, ist es bei modernen Werkzeugmaschinen auch bekannt, eine Ausblasanordnung in die Spindel zu integrieren.

Bei einer bekannten Werkzeugmaschine, wie sie in dem DE-Prospekt "WERNER Transfer-Center TC" vom Mai 1982, Seite 6, gezeigt ist, führt ein radialer Kanal von einer zylindrischen Außenfläche der rotierenden Spindel schräg nach oben in einen oberen Bereich der Spindel, der bei eingesetztem Werkzeughalter einen Freiraum oberhalb des Werkzeugkegels bildet. Die radiale Bohrung steht dabei einem raumfesten Druckluftanschluß in einem Lagerring des Spindelstocks gegenüber.

Diese bekannte Anordnung hat jedoch den Nachteil, daß der raumfeste Kanal im Lagerring nur in einer einzigen Drehstellung der Spindel mit dem radialen Kanal in der Spindel fluchtet, so daß die Spindel in einer definierten Drehstellung angehalten werden muß, damit die Spindelaufnahme ausgeblasen werden kann, weil nur in dieser einen Drehstellung eine Verbindung der Kanäle zwischen raumfestem Lagerring und rotierender Spindel existiert.

Bei bestimmten Werkzeugmaschinen ist jedoch nicht gewährleistet, daß die rotierende Spindel immer in derselben Drehstellung angehalten wird. Dies kann beispielsweise dann der Fall sein, wenn bei einer Werkzeugmaschine das Werkzeugmagazin ringförmig um den Spindelstock herum angeordnet ist. In diesem Falle ist jedem Werkzeughalter, der sich in einer vorbestimmten peripheren Position im Werkzeugmagazin befindet, ein definierter Greifarm zugeordnet, der in einer Radialebene verschwenkbar ist, um das eine Werkzeug aus seiner peripheren Magazinstellung in die zentrale Spindelstellung zu überführen.

Aufgrund dieser konstruktiven Gegebenheiten hält bei dieser bekannten Werkzeugmaschine die Spindel in einer bestimmten Drehstellung an, in der der "alte" Werkzeughalter in einer bestimmten Radialebene durch seinen zugeordneten Greifarm ausgewechselt werden kann. Die Spindel wird nun um einen vorbestimmten Winkel verdreht, bis diejenige Radialebene erreicht ist, in der der "neue" Werkzeughalter durch seinen zugeordneten Greifarm eingewechselt werden kann. Ein Stillstand der Spindel tritt daher nur in zwei definierten Verdrehstellungen auf.

Aus der bereits eingangs genannten DE-OS 33 20 873 ist nun eine Ausblasanordnung bekannt, bei der die Aufnahme der Spindel in jeder beliebigen Drehstellung der Spindel betätigt werden kann. Hierzu ist die rotierende Spindel mit einem Ring versehen, der eine äußere Ringnut aufweist. Von einem gegenüberstehenden raumfesten Lagerring des Spindelstocks stehen zwei kreisringförmige elastische Dichtungen in zueinander parallelen Radialebenen derart ab, daß sie sich in unmittelbarer Nähe der radialen Stirnflächen der Außenringnut der Spindel befinden, diese jedoch nicht berühren.

Durch den raumfesten Lagerring des Spindelstocks ist eine Druckluftleitung bis in den Bereich zwischen den beiden kreisringförmigen Dichtungen geführt. Wenn nun die Spindel stillsteht und die Druckluftleitung mit Druckluft beaufschlagt wird, so werden die beiden kreisringförmigen Dichtungen infolge des Luftdrucks in axialer Richtung voneinander weg nach außen gebogen, so daß sie sich an die radialen Stirnflächen der Außenringnut der Spindel anlegen. Auf diese Weise wird der Übergang vom raumfesten Lagerring zur drehbaren Spindel über die gesamte Peripherie der Außenringnut abgedichtet.

Wenn die Druckluft nach Abschluß des Ausblasvorganges wieder abgeschaltet wird, so kehren die kreisringförmigen Dichtungen infolge ihrer Elastizität wieder in ihre Ausgangstellung zurück, in der sie keine Berührung mit der Spindel mehr aufweisen.

Es hat sich indes in der Praxis gezeigt, daß die bekannte Werkzeugmaschine mit Nachteilen behaftet ist, weil die kreisringförmigen Dichtungen keine genügende Dichtwirkung entfalten. Dies liegt u.a. daran, daß einerseits ein genügender axialer Abstand zwischen den Dichtungen und den radialen Stirnflächen der Außenringnut eingestellt werden muß, andererseits aber die anströmende Druckluft über die so gebildete Ringspalte abströmen kann, ohne daß sich ein ausreichender Druck aufbaut, um die elastischen Dichtungen axial nach außen zu biegen.

Der Erfindung liegt daher die Aufgabe zugrunde, eine Werkzeugmaschine der eingangs genannten Art dahingehend weiterzubilden, daß die Dichtwirkung zwischen stationärem Lagerring und drehbarer Spindel so weit verbessert wird, daß große Mengen an Druckluft zum Ausblasen der Aufnahme zugeführt werden können.

Diese Aufgabe wird erfindungsgemäß dadurch gelöst, daß axial beidseits der ersten Ringnut eine zweite und eine dritte Ringnut im Lagerring angeordnet sind, daß in die zweite und in die dritte Ringnut jeweils eine ringförmige Dichtung eingelegt ist, und daß die ringförmigen Dichtungen in der zweiten und der dritten Ringnut von ihrer von der Spindel abgewandten Seite her radial mit Druckluft beaufschlagbar sind.

Die der Erfindung zugrundeliegende Aufgabe wird auf diese Weise vollkommen gelöst. Die radiale Druckbeaufschlagung der beiden Dichtungen führt nämlich dazu, daß diese gestaucht werden, weil sich ihr Durchmesser und damit ihr Umfang infolge der Druckbeaufschlagung verkleinert. Die derart gestauchten ringförmigen Dichtungen legen sich dann radial an die stillstehende Spindel an, so daß die erste Ringnut in axialer Richtung nach beiden Seiten hin vollkommen abgedichtet ist. Da sich die Dichtungen im Gegensatz zum vorstehend referierten Stand der Technik auch nicht im Strömungsweg der Ausblasluft befinden, kann sich ein genügend hoher Luftdruck auf der von der Spindel abgewandten Seite der Dichtungen aufbauen, um diese in der geschilderten Weise zu stauchen. Es ist aus diesem Grunde auch möglich, daß die Dichtkraft in einer radialen Richtung und nicht, wie beim referierten Stand der Technik, in einer axialen Richtung wirkt.

Bei einer bevorzugten Ausgestaltung der Erfindung sind die ringförmigen Dichtungen im Radialschnitt X-förmig ausgebildet, wobei die freien Enden des "X" abgerundet sind und an radialen Stirnflächen der zweiten bzw. dritten Ringnut anliegen.

Diese Maßnahmen haben den Vorteil, daß eine mehrfache Dichtwirkung eintritt, weil der gestauchte X-förmige Dichtring sich sowohl in radialer Richtung an die Spindel wie auch in axialer Richtung an die radialen Stirnflächen der zweiten bzw. dritten Ringnut anlegt.

Schließlich ist ein Ausführungsbeispiel der Erfindung besonders bevorzugt, bei dem die erste Ringnut einerseits und die zweite sowie die dritte Ringnut andererseits über unterschiedliche Kanäle separat mit Druckluft beaufschlagbar sind.

Diese Maßnahmen haben den Vorteil, daß zunächst ein Druck auf die Dichtungen gegeben werden kann, um die erste Ringnut in axialer Richtung beidseits abzudichten, ehe dann Ausblasluft auf die erste Ringnut gegeben wird. Auf diese Weise wird vermieden, daß von der ersten Ringnut her Ausblasluft in den Bereich der Dichtungen gelangt und diese radial nach außen, entgegen der betätigenden Druckluft, beaufschlagt.

Weitere Vorteile ergeben sich aus der Beschreibung der beigefügten Zeichnung.

Ein Ausführungsbeispiel der Erfindung ist in der Zeichnung dargestellt und wird in der nachfolgenden Beschreibung näher erläutert. Es zeigen:
- Fig. 1: eine Seitenansicht, im Schnitt, durch einen Teil einer Spindel eines Ausführungsbeispiels einer erfindungsgemäßen Werkzeugmaschine;
- Fig. 2: einen Ausschnitt aus Fig. 1, in stark vergrößertem Maßstabe, zur Erläuterung der Dichtwirkung einer im Radialschnitt X-förmigen Ringdichtung.

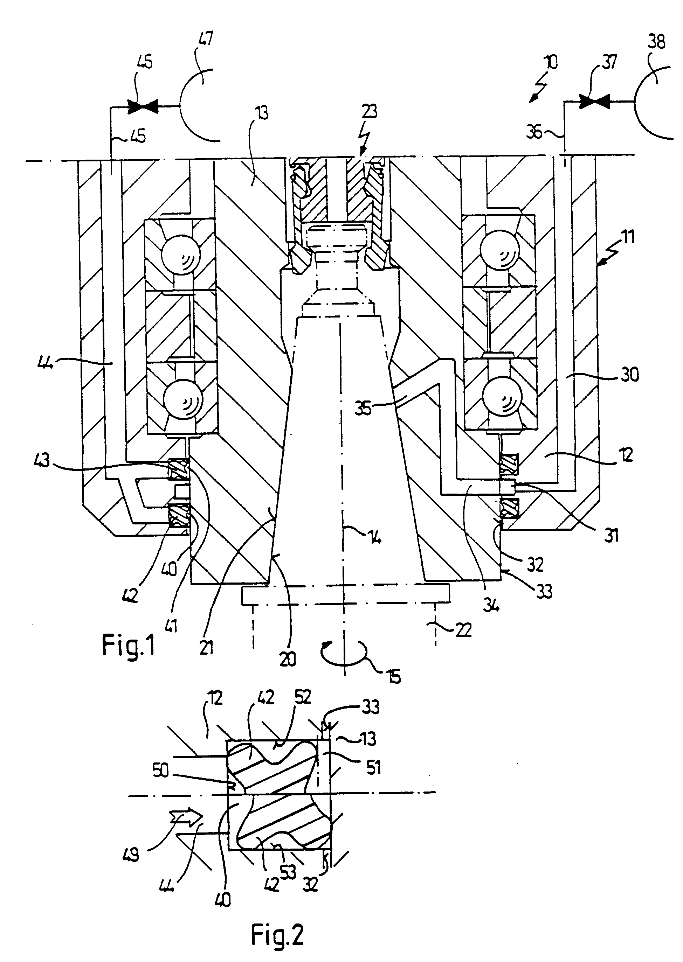

In Fig. 1 weist eine insgesamt mit 10 angedeutete Werkzeugmaschine einen Spindelstock 11 auf, der nach unten in einen raumfesten Lagerring 12 ausläuft. Der Lagerring 12 umschließt konzentrisch eine Spindel 13, die um eine Spindelachse 14 drehbar ist, wie mit einem Pfeil 15 angedeutet.

Die Spindel 13 ist an ihrer Unterseite mit einer innenkegeligen Aufnahme 20 versehen, die komplementär zu einem Kegel 21 eines Werkzeughalters 22 ausgebildet ist. Die Aufnahme 20 ist an ihrer Oberseite mit Spannmitteln 23 versehen, um die Werkzeughalter 23 in Fig. 1 von unten nach oben in die Aufnahme 20 hereinziehen und arretieren zu können.

Der raumfeste Lagerring 12 ist von einer axial verlaufenden ersten Druckluftleitung 30 durchsetzt, die an der Unterseite des Lagerringes 12 radial nach innen umgelenkt ist und dort in eine erste Ringnut 31 einer innenzylindrischen Fläche 32 des Lagerringes 12 mündet.

Der innenzylindrischen Fläche 32 steht mit geringem radialem Spiel eine außenzylindrische Fläche 33 der Spindel 13 gegenüber. Ein Kanal 34 mündet in die außenzylindrische Flache 33 in einer Position, die der ersten Ringnut 31 gerade gegenübersteht.

Der Kanal 34 ist dann axial nach oben geführt und läuft dann in einer Ausblasöffnung 35 in die Aufnahme 20 aus.

Die erste Druckluftleitung 30 ist in der Oberseite des Spindelstocks 11 an eine weitere Druckluftleitung 36 angeschlossen, in die ein Ventil 37 geschaltet ist, ehe die Druckluftleitung 36 in einer Druckluftquelle 38 mündet.

Auf beiden axialen Seiten der ersten Ringnut 31 sind weitere Ringnuten in der innenzylindrischen Fläche 32 angebracht, nämlich eine zweite Ringnut 40 unterhalb und eine dritte Ringnut 41 oberhalb der ersten Ringnut 31. In die zweite Ringnut 40 und in die dritte Ringnut 41 sind jeweils eine Ringdichtung 42, 43 eingelegt.

Eine zweite Druckluftleitung 44, die an ihrem unteren Ende verzweigt ist, ist ebenfalls axial durch den raumfesten Lagerring 12 geführt und auf der von der Spindel 13 abgewandten Seite an die zweite und dritte Ringnut 40, 41 angeschlossen.

Auch die zweite Druckluftleitung 44 ist über eine weitere Druckluftleitung 45 und ein Ventil 46 an eine Druckluftquelle 47 angeschlossen.

Wie man insbesondere aus der vergrößerten Darstellung der Fig. 2 erkennen kann, haben die Ringdichtungen 42, 43 im Radialschnitt eine X-förmige Gestalt, wobei die freien Enden des "X" abgerundet ausgebildet sind.

In der oberen Hälfte der Fig. 2 ist die Ringdichtung 42 im unbelasteten Zustand dargestellt. Man erkennt dort, daß die freien Enden des "X" sowohl an einer Innenringfläche 50 der zweiten Ringnut 40 wie auch an der radialen Stirnfläche 52 anliegen. Die Dichtung 42 und die Ringnut 40 sind dabei so dimensioniert, daß im unbelasteten Zustand der Dichtung 42 ein Abstand 41 zur außenzylindrischen Fläche 33 der Spindel 13 verbleibt. Dies wird in radialer Richtung dadurch erreicht, daß der Außendurchmesser der Dichtung 42 gerade dem Durchmesser der Innenringfläche 50 angeglichen wird.

Wird nun, wie in der unteren Hälfte der Fig. 2 durch einen Pfeil 49 angedeutet, Druckluft auf die zweite Druckluftleitung 44 gegeben, so wird die Dichtung 42 in radialer Richtung nach innen, auf die Spindel 13 zu, verschoben. Die freien Enden des "X" gleiten dabei auf der radialen Stirnfläche 53 nach innen, bis die Dichtung 42 sich an die außenzylindrische Fläche 33 der Spindel 13 anlegt.

Da sich dabei der Durchmesser und damit auch der Umfang der Dichtung 42 verkleinert, wird die Dichtung 42 gestaucht, was aufgrund des elastischen Materials, aus dem die Dichtung 42 besteht, möglich ist.

Andererseits bedeutet dies, daß dann, wenn die Druckluft wieder von der zweiten Druckluftleitung 44 abgeschaltet wird, sich die Dichtung 42 wieder selbsttätig elastisch dehnt, so daß ohne weiteres Zutun die Ausgangsstellung der oberen Hälfte der Fig. 2 eingenommen wird.

Über die Ventile 37 und 46 kann der Ausblasvorgang gesteuert ablaufen.

Hierzu wird bei geschlossenem Ventil 37 zunächst das Ventil 46 geöffnet und damit Druckluft aus der Druckluftquelle 47 auf die Rückseite der Dichtungen 42, 43 gegeben. Auf diese Weise wird die erste Ringnut 31 in axialer Richtung auf beiden Seiten abgedichtet, weil der Zwischenraum zwischen den Flächen 32, 33 überbückt wird.

Es wird nun bei weiterhin geöffnetem Ventil 46 das Ventil 37 geöffnet und Ausblasluft aus der Druckluftquelle 38 über die erste Druckluftleitung 30 und den Kanal 34 zur Ausblasöffnung 35 geleitet.

Es wird nun zunächst das Ventil 37 und dann das Ventil 46 geschlossen, so daß sich die Dichtungen 42, 43 elastisch wieder dehnen können und sich der Abstand 51 zwischen den Dichtungen 42 und der außenzylindrischen Flache 33 der Spindel 13 einstellt. Die Spindel 13 kann dann wieder frei rotieren, ohne daß ein Bremsmoment ausgeübt wird.

## Patentansprüche

1. Werkzeugmaschine mit einem Spindelstock (11), in dem eine um eine Spindelachse (14) drehbare Spindel (13) gelagert ist, die eine Aufnahme (20) für Kegel (21) von Werkzeughaltern (22) aufweist, mit einer in einem raumfesten Lagerring (12) des Spindelstocks (11) angeordneten ersten Ringnut (31), an die ein erstes Ende mindestens eines Kanals (34) der drehbaren Spindel (13) anschließt, der am zweiten Ende mit einer Ausblasöffnung (35) in die Aufnahme (20) mündet, wobei die erste Ringnut (31) an eine Druckluftquelle (38) anschließbar ist und wobei ferner bei stillstehender Spindel (13) eine elastische Ringdichtung (42, 43) axial beidseits der ersten Ringnut (31) mittels Luftdruck abdichtend zwischen den raumfesten Lagerring (12) und die Spindel (13) anlegbar ist, dadurch gekennzeichnet, daß axial beidseits der ersten Ringnut (31) eine zweite und eine dritte Ringnut (40, 41) im Lagerring (12) angeordnet sind, daß in die zweite und in die dritte Ringnut (40, 41) jeweils eine ringförmige Dichtung (42, 43) eingelegt ist, und daß die ringförmigen Dichtungen (42, 43) in der zweiten und der dritten Ringnut (40, 41) von ihrer von der Spindel (13) abgewandten Seite her radial mit Druckluft (49) beaufschlagbar sind.

2. Werkzeugmaschine nach Anspruch 1, dadurch gekennzeichnet, daß die ringförmigen Dichtungen (42, 43) im Radialschnitt X-förmig ausgebildet sind, wobei die freien Enden des "X" abgerundet sind und an radialen Stirnflächen (52, 53) der zweiten bzw. dritten Ringnut (40, 41) anliegen.

3. Werkzeugmaschine nach Anspruch 1 oder 2, dadurch gekennzeichnet, daß die erste Ringnut (31) einerseits und die zweite sowie die dritte Ringnut (40, 41) andererseits über unterschiedliche Kanäle (30, 44) separat mit Druckluft beaufschlagbar sind.

## Claims

1. A machine tool comprising a spindle stock (11) and a spindle (13) therein arranged rotatably about a spindle axis (14), the spindle (13) having a receiving opening (20) for tapers (21) of toolholders (22), a first annular groove (31) arranged in a stationary spindle stock (11) bearing ring (12) and communicating with a first terminal of at least one channel (34) of the rotatable spindle (13), the channel (34) terminating into the receiving opening (20) via a blow hole (35), the first annular groove (31) being connectable with a source (38) of compressed air, and an elastic ring seal (42, 43) being adapted to be brought in sealing contact by air pressure between the stationary bearing ring (12) and the spindle (13) on both axial sides of the first annular groove (31), characterized in that a second and a third annular groove (40, 41) are provided in the bearing ring (12) on both axial sides of the first annular groove (31), that a ring-shaped seal (42, 43) is inserted in both the second and the third annular groove (40, 41), and that the ring-shaped seals (42, 43) in the second and the third annular groove (40, 41) are adapted to be subjected to compressed air (49) from their side facing away from the spindle (13).

2. The machine tool of claim 1, characterized in that the ring-shaped seals (42, 43) are X-shaped in a radial sectional view, the free edges of the "X" being rounded and contacting radial front faces (42, 43) of the second and the third annular groove (40, 41), respectively.

3. The machine tool of claim 1 or 2, characterized in that the first annular groove (31) on the one hand side and the second and the third annular groove (40, 41) on the other hand side may be separately subjected with compressed air via different channels (30, 44).

## Revendications

1. Machine-outil avec une poupée (11) dans laquelle est supportée une broche (13) rotative autour d'un axe de broche (14), qui présente un dispositif de réception (20) pour des cônes (21) de porte-outils (22), avec une première rainure annulaire (31) disposée dans un anneau de support (12) fixe dans l'espace de la poupée (11), et sur laquelle se raccorde une première extrémité d'au moins un canal (34) de la broche (13) rotative, qui débouche à la seconde extrémité par une ouverture d'échappement (35) dans le dispositif de réception (20), la première rainure annulaire (31) pouvant être raccordée à une source d'air comprimé (38) et un joint annulaire élastique (42, 43) pouvant en outre être appliqué de manière étanche, lorsque la broche (13) est à l'arrêt, entre l'anneau de support (12) fixe dans l'espace et la broche (13) dans le sens axial des deux côtés de la première rainure annulaire (31) au moyen d'air comprimé, caractérisée en ce qu'une seconde rainure annulaire et une troisième (40, 41) sont disposées dans l'anneau de support (12) dans le sens axial des deux côtés de la première rainure annulaire (31), en ce qu'un joint annulaire (40, 41) est placé respectivement dans la seconde rainure annulaire et la troisième (40, 41), et en ce que les joints annulaires (42, 43) peuvent être sollicités par de l'air comprimé (49) dans le sens radial à partir de leur côté opposé à la broche (13).

2. Machine-outil selon la revendication 1, caractérisée en ce que les joints annulaires (42, 43) sont conformés en X en coupe radiale, les extrémités libres du "X" étant arrondies et reposant sur les faces radiales (52, 53) de la seconde rainure annulaire et de la troisième (40, 41).

3. Machine-outil selon la revendication 1 ou 2, caractérisé en ce que la première rainure annulaire (31) d'une part et la seconde rainure annulaire et la troisième (40, 41) d'autre part peuvent être sollicitées séparément par de l'air comprimé par l'intermédiaire de canaux différents (30, 44).
